# EUROPÄISCHE PATENTSCHRIFT

(11) **EP 3 231 554 B1**
(45) Veröffentlichungstag und Bekanntmachung des Hinweises auf die Patenterteilung: **26.06.2019**
(21) Anmeldenummer: 17151740.2
(22) Anmeldetag: 17.01.2017
(51) Int. Cl.: B23Q 16/06, B29D 30/00

(54) **INDEXIER-VORRICHTUNG FÜR BEWEGLICHE ELEMENTE**
INDEXING DEVICE FOR MOVING ELEMENTS
DISPOSITIF D'INDEXAGE POUR ÉLÉMENTS MOBILES

(30) Priorität: 13.04.2016 DE 102016206148
(43) Veröffentlichungstag der Anmeldung: 18.10.2017
(73) Patentinhaber: Continental Reifen Deutschland GmbH, 30165 Hannover (DE)
(72) Erfinder: BRAEKER, Tobias, 30419 Hannover (DE); BERGER, Markus, 31319 Sehnde (DE); SOVICKA, Ivan, 76502 Otrokovice (CZ); BREMER, Jan, 31515 Wunstorf (DE)
(74) Vertreter: Widjaja, Wira

(56) Entgegenhaltungen:
- EP-A1- 2 012 966
- DE-A1-102010 042 086
- US-A- 848 822

## Beschreibung

Die Erfindung betrifft eine Vorrichtung zur Fixierung mindestens eines beweglichen Elements.

Eine Vorrichtung zur Fixierung mindestens einen beweglichen Elements wird auch als Indexier-Vorrichtung oder Indexiereinheit bezeichnet.

Indexier-Vorrichtungen dienen zum Feststellen, Sperren beziehungsweise Blockieren mindestens eines beweglichen Elements einer Vorrichtung beispielsweise eines Geräts, einer Maschine oder dergleichen. Dabei kann mindestens ein bewegliches Element an einer Translations- oder einer Rotationsbewegung gehindert werden. Auch können mindestens zwei bewegliche Elemente an einer Relativbewegung zueinander gehindert werden. Unter Translation wird die geradlinig fortschreitende Bewegung eines Körpers, bei der alle seine Punkte parallele Bahnen in gleicher Richtung durchlaufen verstanden. Rotation meint die kreisförmig fortschreitende Bewegung eines Körpers, charakteristisch für eine Rotation ist die Kreisbahn der jeweiligen Punkte auf einer zweidimensionalen Bewegungsebene. Relativbewegung ist die auf einen anderen Körper bezogene Bewegung eines Körpers.

Als Stoppposition wird bei Indexier-Vorrichtungen diejenige Position des beweglichen Elements bezeichnet, in dem dieses Fixiert werden soll und beispielsweise zur Ausführung eines Arbeitsschrittes verharren soll.

Die EP 2 012 966 B1 offenbart eine Vorrichtung zur lagerichtigen Fixierung von einem beweglichen Element, aufweisend eine Antriebseinheit, eine Führungseinrichtung sowie ein Eingriffselement, wobei die in ihrer Stoppposition zwei Teilaufnahmeeinheiten für das Eingriffselement gegenüberliegend übereinander angeordnet sind und eine Aufnahme für das Eingriffselement ausbilden, wobei eine untere Teilaufnahmeeinheit stationär benachbart zu der Führungseinheit angeordnet ist und eine obere Teilaufnahmeeinheit am beweglichen Element angeordnet ist, wobei durch das Zusammenwirken von Führungseinheit, den zwei Teilaufnahmeeinheiten und dem Eingriffselement eine spielfreie Zentrierung für das bewegliche Element erfolgt.

Die DE 10 2010 042 086 A1 betrifft einen Drehteller zur Aufnahme, Transport und Fixierung von Bauteilen mit den Elementen wie mindestens einem drehbar gelagerten Auflageteller mit Freilauf und mit mindestens einer Kurvenrolle, mindestens einer Indexiereinheit zur automatischen Aufnahme und Zentrierung der mindestens einen Kurvenrolle, wobei eine Teilung auf dem Auflageteller durch Kurvenrollen markiert ist, so dass dieser in gleichmäßige Segmente unterteilt ist und über die mindestens eine Kurvenrolle mit der Indexiereinheit zusammenwirkt und nach Bearbeitung der Bauteile an einem entsprechenden Arbeitssystem für die nächste Drehbewegung freigegeben ist, sowie einem Verfahren zum Betrieb des Drehtellers, bestehend aus den Schritten wie Initialisieren der Drehbewegung des Drehtellers durch Lösen des Kraftschlusses zwischen Anschlag und mindestens einer in einer Indexiereinheit befindlichen Kurvenrolle, Einfahren folgender mindestens einer Kurvenrolle in der Indexiereinheit, Abbremsen der mindestens einen Kurvenrolle mittels eines gefederten Anschlags, Zentrierung der in der Indexiereinheit befindlichen mindestens einen Kurvenrolle mittels eines Zentrierelements, Freigabe der in der Indexiereinheit befindlichen mindestens einen Kurvenrolle nach Beendigung der Bearbeitung von Bauteilen an einem Arbeitssystem, für die nächste Drehbewegung.

Aus der WO 2007/121907 A1 eine Indexiervorrichtung bekannt, welche eine in einem Gehäuse angeordneten Antrieb umfasst, mittels welchem ein Schwenkteller um eine vertikale Achse schwenkbar ist. Zwischen einem Antriebselement des Antriebes und dem Schwenkteller ist mindestens eine Rastsperre mit einer formschlüssigen, mit begrenzter Haltekraft ausgestatteten Sperrung angeordnet. Die Rastsperre ist insbesondere ein Feder beaufschlagter Sperrmechanismus und soll eine mechanische Überlastsicherung zur Verfügung stellen. Bei einer Überlast wird der werkstücktragende Schwenkteller vom Antrieb abgekoppelt.

Aus dem Stand der Technik ist bekannt, dass zur genauen Zentrierung und Verriegelung von bewegten Bauteilen zueinander, lineargeführte Bolzen/Räder in eine konische Öffnung geschoben werden. Durch die konische Öffnung zentriert sich der Bolzen spielfrei. Die lineargeführte Achse des Bolzens bleibt weiterhin spielbehaftet. Auftretende Kräfte werden über die Linearführung abgeführt. Der Bolzen unterliegt einem Biegemoment.

Der Erfindung liegt daher die Aufgabe zu Grunde, eine Vorrichtung zur Verfügung zu stellen, welche ein spielfreies Zentrieren für ein bewegliches Element gewährleistet.

Gelöst wird diese Aufgabe erfindungsgemäß durch eine Vorrichtung nach Anspruch 1.

Durch diese Anordnung weist die Indexier-Vorrichtung eine sehr kompakte Bauform auf. Durch das zur Deckung bringen von mindestens zwei Teilaufnahmeeinheiten kann das Eingriffselement in die dadurch gebildete Aufnahme eingefahren werden. Das Eingriffselement hat in seiner Verriegelungsposition keine Freiheitsgrade, dadurch erfolgt eine spielfreie Zentrierung und Verriegelung des beweglichen Elements gegenüber dem stationären Teil der Indexier-Vorrichtung. Wenn die Verriegelung wieder gelöst wird, sind die Bauteile wieder frei beweglich. Nach dem Lösen der Verriegelung kann das mindestens eine bewegliche Element eine Translations- oder eine Rotationsbewegung durchführen. Auch können nach dem Lösen der Verriegelung mindestens zwei bewegliche Elemente eine Relativbewegung zueinander vollziehen.

Elastomer-Erzeugnisse dienen beispielsweise zur Herstellung von Reifen beziehungsweise zur Herstellung von Reifenbauteilen sowie zur Herstellung von Transportbändern, Schläuchen, Luftfederbälge, Antriebsriemen, Membrane, Schwingungsdämpfer und weiteren Gummiprodukten.

Weiterhin ist erfindungsgemäß vorgesehen, dass das Eingriffselement am vorderen Ende eine Aussparung aufweist. Hierdurch verharrt das Eingriffselement bereits in seiner eingefahrenen Ruheposition unterhalb der oberen Teilaufnahmeeinheit, gelagert auf der unteren Teilaufnahmeeinheit sowie in der Führungseinheit. Das Eingriffselement muss lediglich um den Betrag der Länge der Aussparung in Richtung des beweglichen Elements verfahren werden, um in Eingriff zu gelangen. Hieraus ergibt sich eine kurze Ansprechbeziehungsweise Reaktionszeit für das Eingriffselement. Der Hub für das Eingriffselement wird minimiert und beschränkt sich beispielsweise auf die Länge der Aussparung.

Aussparung beziehungsweise Ausklinkung bezeichnet ein örtliches Entfernen von äußeren Querschnittteilen des Eingriffselements.

Weiterhin ist erfindungsgemäß vorgesehen, dass das Eingriffselement einen zur mittleren Trennungsebene achsensymmetrischen Querschnitt in einer Schnittrichtung quer zu seiner Längserstreckung aufweist. Hierdurch wird eine einfache Führung des Eingriffselements ermöglicht. Ein zur Trennungsebene in einer Schnittrichtung quer zu der Längserstreckung des Eingriffselements achsensymmetriescher Querschnitt kann beispielsweise ein Kreis, ein Sechseck, ein Achteck, ein Rechteck, eine Raute oder dergleichen sein.

Weiterhin ist erfindungsgemäß vorgesehen, dass das Eingriffselement einen quadratischen Querschnitt in einer Schnittrichtung quer zu seiner Längserstreckung aufweist. Hierdurch wird das Eingriffselement an einer Rotation um seine eigene Längsachse gehindert. Die Führung an den sich daraus ergebenen planen Flächen erfolgt präzise.

Weiterhin ist erfindungsgemäß vorgesehen, dass das Eingriffselement in seiner Längsstreckung im Bereich der Teilaufnahmeeinheiten konisch ausgeführt ist und dass das Eingriffselement im Bereich der Führungseinheit zylindrisch ausgeführt ist oder planparallele Flächen aufweist. Über seine Längsachse ist das Eingriffselement somit bereichsweise konisch ausgeführt. Dies führt dazu, dass das Eingriffselement im zylinderförmig ausgeführten Bereich oder mit planparallelen Flächen ausgeführten Bereich sicher und toleranzfrei oder zumindest toleranzarm geführt wird. Im konisch ausgeführten Bereich, erfolgt bei der Verschiebung des Eingriffselements zwischen die mindestens zwei Teilaufnahmeeinheiten eine Zentrierung des Eingriffselements sowie eine Vernichtung der Toleranzen. Es entsteht eine spielfreie Fixierung des Eingriffselement zwischen den mindestens zwei Teilaufnahmeeinheiten und der Führungseinheit. Das Eingriffselement in seiner Längserstreckung in Richtung der Teilaufnahmeeinheiten eine bereichsweise konische Verjüngung seines Querschnitts erfährt. Hierdurch werden beim Einfahren des Eingriffselements zwischen die Teilaufnahmeeinheiten mögliche Toleranzen beziehungsweise mögliches Spiel herausgedrückt. Das Eingriffselement wird soweit in die Aufnahme hinein gedrückt, bis jegliches Spiel im System eliminiert ist. Insbesondere die Kugellager in Verbindung mit dem konischen Aufbau des Eingriffselements in seiner Längserstreckung ermöglichen eine feste, spielfreie Positionierung des beweglichen Elements.

Weiterhin ist erfindungsgemäß vorgesehen, dass Lagerstellen für das Eingriffselement an der Führungseinrichtung und an den mindestens zwei Teilaufnahmeeinheiten ausgebildet sind und einen Winkel zwischen 0 ° und 90 °, bevorzugt zwischen 30 ° und 60 °, besonders bevorzugt zwischen 40 ° und 50 ° im Hinblick auf eine senkrecht zu einem Trägerelement stehende Achse aufweisen. Vorzugsweise beträgt der Winkel 45 ° welcher zwischen den Lagerstellen für das Eingriffselement an der Führungseinrichtung sowie an den mindestens zwei Teilaufnahmeeinheiten ausgebildet ist, im Hinblick auf eine senkrecht zu einem Trägerelement stehende Achse. Diese Anordnung der Lagerstellen bewirkt eine sichere, lagerichtige präzise Führung des Eingriffselements. An der Führungseinrichtung sind bevorzugt vier um das Eingriffselement gleichmäßig verteilt angeordnete Lagerstellen vorgesehen. An der unteren Teilaufnahmeeinheit sind bevorzugt zwei Lagerstellen angeordnet, welche sich V-förmig gegenüberstehen und eine Lagerung und/oder Führung für das Eingriffselement ausbilden. Das obere Teilaufnahmeelement weist bevorzugt zwei Lagerstellen auf, welche sich V-förmig gegenüberliegen und eine Lagerung und/oder Führung für das Eingriffselement ausbilden. Sind die untere Teilaufnahmeeinheit und die obere Teilaufnahmeeinheit übereinander, in der Eingriffsposition für das Eingriffselement angeordnet, bilden sie zusammen eine Aussparung mit vier gleichmäßig um das Eingriffselement angeordneten Lagerstellen aus.

Weiterhin ist erfindungsgemäß vorgesehen, dass die Führungsflächen des Eingriffselements einen Winkel zwischen 0 ° und 90 °, bevorzugt zwischen 30 ° und 60 °, besonders bevorzugt zwischen 40 ° und 50 ° im Hinblick auf eine senkrecht zu einem Trägerelement stehende Achse aufweisen. Vorzugsweise weisen die an dem Eingriffselement ausgebildeten Führungsflächen einen Winkel von 45 ° im Hinblick auf eine senkrecht zu einem Trägerelement stehende Achse auf. Hierdurch steht das Eingriffselement auf einer Spitze und liegt somit sicher im Führungssystem. Ein Verdrehen des Eingriffselements um die eigene Längsachse wird somit wirksam verhindert.

Weiterhin ist erfindungsgemäß vorgesehen, dass jede Lagerstelle zum Eingriffselement planparallele Auflagerflächen oder Führungsrollen aufweist. Hierdurch ist eine sichere Lagerung und Führung des Eingriffselements gewährleistet.

Weiterhin ist erfindungsgemäß vorgesehen, dass jede Lagerstelle einen Lagerbock, eine Führungsrolle und mindestens ein Kugellager aufweist. Durch die Führungsrollen wird eine Linearführung für das Eingriffselement entlang seiner Längsachse verbessert. Kugellager für die Führungsrollen verbessern das Laufverhalten der Führungsrollen. Weiterhin kann über die Kugellager das Spiel aus dem System herausgedrückt werden.

Weiterhin ist erfindungsgemäß vorgesehen, dass die Aussparung an dem Eingriffselement eine Längserstreckung aufweist, welche in der eingezogenen Position des Eingriffselements die obere Teilaufnahmeeinheit samt ihrer Lagerstellen frei gibt. Hierdurch kann das Eingriffselement in seiner Ruheposition unterhalb der oberen Teilaufnahmeeinheit verharren. Das bewegliche Element samt der oberen Teilaufnahmeeinheit kann sich frei aus der Stoppposition heraus bewegen und auch wieder in die Stoppposition zurückbewegen. Das bewegliche Element kann sich in zwei Richtungen von der Stoppposition entfernen und auch aus beiden Richtungen in die Stoppposition zurückbewegen.

An dem beweglichen Element können mehr als eine obere Teilaufnahmeeinheit vorgesehen sein, um mehrere unterschiedliche Stopppositionen zu realisieren. Je Stoppposition muss eine obere Teilaufnahmeeinheit vorgesehen werden. Jede dieser weiteren Teilaufnahmeeinheiten interagiert mit der einen unteren Teilaufnahmeeinheit zur Ausbildung einer Aufnahme für das Eingriffselement in der jeweiligen Stoppposition.

In einer Ausgestaltung ist vorgesehen, dass das Eingriffselement eine Bohrung aufweist. Hierdurch wird zur Aufrechterhaltung der Funktion des Eingriffselements nicht benötigtes Material entfernt. Die bewegte Masse des Eingriffselements verringert sich. Hierdurch verbessert sich das Ansprechverhalten des Eingriffselements beim Verfahren des Eingriffselements.
Weiterhin ist erfindungsgemäß vorgesehen, dass die Lagerstellen von der ortsfesten Teilaufnahmeeinheit und der beweglichen Teilaufnahmeeinheit quer zu der Eingriffselementlängsachse gegeneinander fluchtend ausgerichtet sind. Hierdurch wird ein leichtes und sicheres Eindringen des Eingriffselements zwischen die mindestens zwei Teilaufnahmeeinheiten ermöglicht. Durch die fluchtende Ausführung der Achsen entsteht kein Drehmoment in den Lagerstellen.

Weiterhin ist in einer Ausführung der Vorrichtung vorgesehen, dass mindestens ein Positionssensor vorgesehen ist, welcher mit mindestens einem am beweglichen Bauteil festgelegten Kontaktelement interagiert. Hierdurch kann die Position der oberen Teilaufnahmeeinheit im Verhältnis zur unteren Teilaufnahmeeinheit detektiert werden und dadurch gewährleistet werden, dass die Antriebseinheit für das Eingriffselement diese nur in Richtung des beweglichen Elements verfährt, wenn eine Aufnahme für das Eingriffselement aus einer unteren und einer oberen Teilaufnahmeeinheit ausgebildet ist.

Weiterhin ist erfindungsgemäß vorgesehen, dass die Antriebseinheit als Kolbenstangenzylinder ausgeführt ist und dass das Eingriffselement mit einer Kolbenstange des Kolbenstangenzylinders gekoppelt ist. Ein Kolbenstangenzylinder ermöglicht eine präzise und schnelle Betätigung des Eingriffselements. Durch die Kopplung zwischen Kolbenstange und Eingriffselement wird das Eingriffselement unmittelbar betätigt. Es sind keine weiteren Übertragungsmittel dazwischen geschaltet, welche das Ansprechverhalten des Eingriffselements negativ beeinflussen könnten.

Die Antriebseinheit kann einen pneumatischen Antrieb, einen elektrischen Antrieb, einen hydraulischen Antrieb, einen Motor-Antrieb oder dergleichen zur Betätigung des Eingriffselements aufweisen. Die Antriebseinheit weist bevorzugt einen Linearantrieb für das Eingriffselement auf.

Weiterhin ist erfindungsgemäß vorgesehen, dass das bewegliche Element als Schwerlast-Rundtisch ausgeführt ist. Auf einem Schwerlast-Rundtisch können verschiedenste Maschinen und Anlagen beziehungsweise Anlagenteile zur Herstellung von Elastomer-Erzeugnissen montiert sein. Durch die Rotation des Schwerlast-Rundtisches können mindestens zwei verschiedene, fixe Stopppositionen angefahren werden, in denen mindestens zwei Arbeits- beziehungsweise Verfahrensschritte durchgeführt werden.

Mit anderen Worten sollen zwei zueinander bewegliche Teile zentriert werden. Jedes der Teile hat eine bogenförmige Ausnehmung quer zur Bewegungsrichtung. Die bogenförmigen Ausnehmungen bilden in der Zentrierposition gemeinsam eine Öffnung. In diese Öffnung wird, quer zur Bewegungsrichtung, ein kegeliger oder pyramidenartiger konischer Stift eingeschoben. Durch die Konizität des Stiftes wird vorhandenes Spiel eliminiert. Querkräfte der zueinander bewegten Teile werden im Stift weitergeleitet, ohne den Stift zu verklemmen oder den Stift einem Biegemoment auszusetzen. Die bogenförmigen Öffnungen können auch durch Rollen/Räder gebildet werden, sodass der konische Stift reibungsfreier hinein rollen kann.

Nachfolgende Vorteile ergeben sich daraus. Es ergibt sich eine spielfreie Zentrierung. Weiterhin können Bauteile Endstoppfrei aneinander vorbei bewegt werden. Es werden keine Biegemomente auf den Bolzen übertragen, dadurch ist die Indexier-Vorrichtung robust bei kleiner Baugröße. Es erfolgt kein Verkannten des Rastbolzens. Nach der Verriegelung kann der Stift leicht gelöst werden.

Die Indexier-Vorrichtung kann überall dort eingesetzt werden, wo bewegte Bauteile zueinander zentriert und verriegelt werden müssen.

Nachfolgend wird ein Ausführungsbeispiel anhand der angefügten Figuren näher erläutert.

Es zeigen:
- Fig. 1: zeigt eine isometrische Ansicht einer Indexier-Vorrichtung,
- Fig. 2: zeigt eine Draufsicht einer Indexier-Vorrichtung gemäß Figur 1,
- Fig. 3: zeigt eine Seitenansicht von links einer Indexier-Vorrichtung gemäß Fig. 1,
- Fig. 4: zeigt eine Vorderansicht einer Indexier-Vorrichtung gemäß Fig. 1,
- Fig. 5: zeigt eine Draufsicht auf eine weitere Indexier-Vorrichtung,
- Fig. 6: zeigt eine Seitenschnittansicht von rechts gemäß der Linie VI - VI in der Figur 5 und
- Fig. 7: zeigt eine Vorderschnittansicht gemäß der Linie VII - VII in der Figur 5.

Gleiche Elemente erhalten in allen Figuren sowie in der nachfolgenden Beschreibung gleiche Bezugszeichen, unabhängig vom jeweiligen Ausführungsbeispiel.

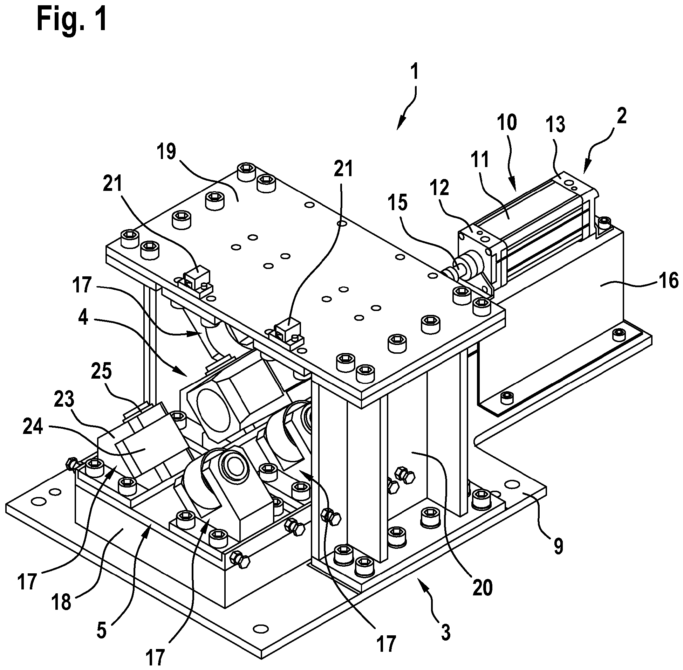

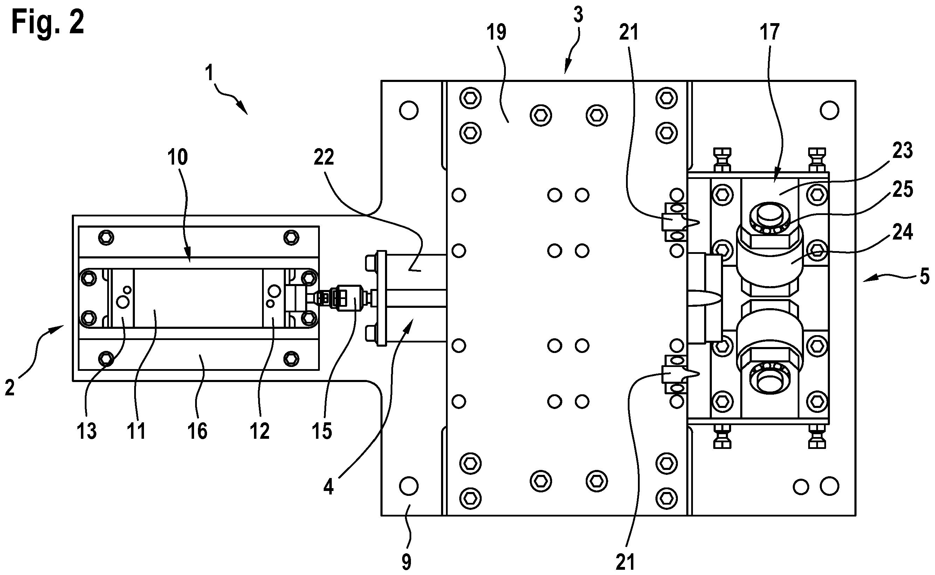

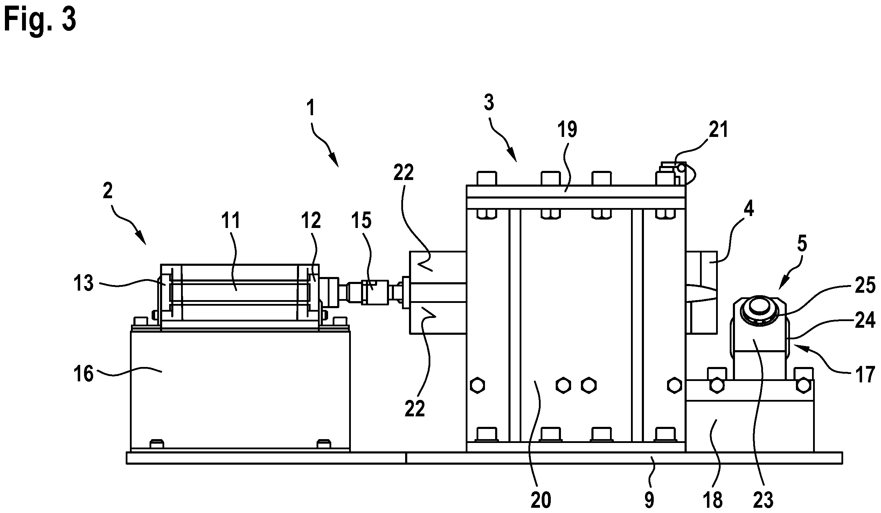

Die Figuren 1 bis 7 zeigen verschiedene Ansichten einer Indexier-Vorrichtung 1. Diese Indexier-Vorrichtung umfasst eine Antriebseinheit 2 sowie eine Führungseinheit 3 für ein Eingriffselement 4. Dieses Eingriffselement 4 ist verschiebbar gelagert in der Führungseinheit 3 sowie auf einer unteren Teilaufnahmeeinheit 5. In einer ersten Position, der eingefahrenen Position, weist das Eingriffselement 4 die geringste Distanz zur Antriebseinheit 2 auf. In dieser ersten Position kann eine obere Teilaufnahmeeinheit 6 eine Aussparung 7 an dem Eingriffselement 4 frei passieren. Die obere Teilaufnahmeeinheit 6 bildet eine korrespondierende Teilaufnahmeeinheit zur unteren Teilaufnahmeeinheit 5 aus. Die obere Teilaufnahmeeinheit 6 ist an einem beweglichen Element 8 angeordnet. Die untere Teilaufnahmeeinheit 5 bildet eine Einheit mit der Antriebseinheit 2 und der Führungseinheit 3 aus, sie sind auf einem Trägerelement 9 fixiert.

Wenn die untere Teilaufnahmeeinheit 5 sowie die obere Teilaufnahmeeinheit 6 eine gegenüberliegende Position oder nahezu gegenüberliegende Position eingenommen haben, kann das Eingriffselement 4 unter Einwirkung der Antriebseinheit 2 in eine zweite Position zwischen die untere Teilaufnahmeeinheit 5 sowie die obere Teilaufnahmeeinheit 6 verfahren werden, sie bilden dann eine Aufnahme für das Eingriffselement aus. Das Eingriffselement 4 nimmt damit eine Position mit größtmöglichem Abstand zur Antriebseinheit 2 ein, seine mindestens eine Stoppposition. Durch die Fixierung des Trägerelements 9 in einer definierten Position wird nun das bewegliche Element 8 ebenfalls in einer definierten Position fixiert.

Mit der Indexier-Vorrichtung 1 ist es somit möglich, feste Indexierpositionen wiederholgenau einzustellen und anzufahren. Die Indexier-Vorrichtung 1 verfügt über eine Schnittstelle zu Prozessleitsystemen, beispielsweise zu einer speicherprogrammierbare Steuerung (SPS) oder einer verbindungsprogrammierten Steuerung (VPS). Über die Indexier-Vorrichtung 1 ist mindestens eine Stoppposition eingestellt, die jederzeit geändert oder um weitere Stopppositionen ergänzt werden kann. Das bewegliche Element 8 kann beispielsweise als Schwerlast-Rundtisch ausgeführt sein. Schwerlast-Rundtische können mit der Indexier-Vorrichtung 1 an verschiedenen Stopppositionen lösbar fixiert werden, damit beispielsweise mindestens ein Arbeitsschritt durch mindestens eine auf dem Schwerlast-Rundtisch montierte Maschine durchgeführt werden kann.

Auf dem beispielsweise als Schwerlast-Rundtisch ausgeführten beweglichen Element 8 können Maschinen zur Herstellung von Reifen beziehungsweise zur Herstellung von Reifenbauteilen sowie zur Herstellung von Transportbändern, Schläuchen, Luftfederbälge, Antriebsriemen, Membrane, Schwingungsdämpfer und weiteren Gummiprodukten angeordnet sein. Der Begriff Reifen umfasst Fahrzeugreifen und Fahrzeugluftreifen.

Die Antriebseinheit 2 kann beispielsweise als Kolbenstangenzylinder 10 ausgeführt sein. Dieser Kolbenstangenzylinder 10 kann wiederum als Pneumatikzylinder ausgeführt sein. Ein Pneumatikzylinder ist ein Bauteil das mit Druckluft als Medium eine Bewegung ausführt.

Dieser Kolbenstangenzylinder 10 weist ein Zylinderrohr 11 auf, welches an der dem Eingriffselement 4 zugewandten Seite mit einem Lagerdeckel 12 verschlossen ist. An der dem Lagerdeckel gegenüberliegenden Seite ist das Zylinderrohr 11 mit einem Abschlussdeckel 13 versehen. In dem Lagerdeckel 12 ist eine Kolbenstange 15 gelagert. Das der Führungseinheit 3 zugewandte Ende der Kolbenstange 15 ist kraft-, form-und/oder stoffschlüssig mit dem Eingriffselement 4 verbunden. An dem dem Eingriffselement 4 gegenüberliegenden Ende der Kolbenstange 15 befindet sich ein Kolben 14. Die Kolbenstange 15 ist das Teil, welches die Kraft und die Bewegung des Zylinders 15 nach außen überträgt. Die Spitze der Kolbenstange 15 kann mit einem Gewinde versehen sein, um das Eingriffselement 4 anzubinden.

Die eigentliche Bewegung im Kolbenstangenzylinder 10 vollzieht der Kolben 14, welcher mit der Kolbenstange 15 verbunden ist. Der Kolben 14 hat noch weitere Aufgaben zusätzlich zur Ausführung der Bewegung. Die Abdichtung zwischen der vorderen und hinteren Zylinderkammer ist eine dieser Aufgaben. Außerdem fällt dem Kolben 14 die Aufgabe zu, die kinetische Restenergie in der Endlage umzuwandeln. Diese Aufgabe teilt sich der Kolben 14 mit dem Lagerdeckel 12 und dem Abschlussdeckel 13.

Der Lagerdeckel 12 verschließt das Zylinderrohr 11 beziehungsweise den Kolbenstangenzylinder 10 auf einer Seite und stellt gleichzeitig eine Lager- und Dichtstelle für die Kolbenstange 15 dar. Einer der Luftanschlüsse kann sich im Lagerdeckel 12 befinden.

Der Abschlussdeckel 13 verschließt das Zylinderrohr 11 beziehungsweise den Kolbenstangenzylinder 10 auf der zweiten Seite. Im Abschlussdeckel 13 kann der zweite Luftanschluss vorgesehen sein.

Der Kolbenstangenzylinder 10 kann als einfachwirkender Zylinder ausgeführt sein. Bei einem einfachwirkenden Zylinder gibt es nur einen Anschluss für Druckluft. Die einströmende Druckluft bewegt den Kolben in eine Richtung, dementsprechend wird in diese Richtung auch die Kraft des Zylinders aufgebaut. Soll der Kolben wieder in seine Grundstellung fahren, wird die Luft aus dem Zylinder entweichen gelassen. Die mechanische Feder drückt den Kolben 15 wieder auf die Grundstellung. Damit in der zweiten Zylinderkammer kein Über- beziehungsweise Unterdruck durch die Kolbenbewegung entsteht, ist dieser Teil mit einer Be-/Entlüftungsbohrung versehen. Die sich hieraus ergebenden Vorteile sind eine definierte Position bei Energieausfall, ein reduzierter Luftverbrauch sowie eine einfache Ansteuerung durch ein 3/2-Wegeventil.

Alternativ kann der Kolbenstangenzylinder 10 als doppeltwirkende Zylinder ausgeführt sein. Der doppeltwirkende Zylinder benötigt für jede Bewegungsrichtung Druckluft. Bei diesem Zylindertyp wird in Aus- und in Einfahrrichtung Kraft über die Druckluft aufgebaut. Die einfachste Ansteuerung eines doppeltwirkenden Zylinders wird mit einem 5/2-Wegeventil realisiert. Die sich hieraus ergebenden Vorteile sind ein Kraftaufbau in beide Bewegungsrichtungen, konstante, hubunabhängige Kraft sowie die Realisierbarkeit von Hüben über mehrere Meter.

Der Kolbenstangenzylinder 10 ist auf einem Sockel 16 angeordnet. Der Sockel 16 wiederum ist auf dem Trägerelement 9 angeordnet.
Die Führungseinheit 3 umfasst vier Lagerstellen 17 für das Eingriffselement 4. Zwei der vier Lagerstellen 17 sind auf einem Podest 18 angeordnet welches wiederum auf dem Trägerelement 9 angeordnet ist. Zwei weitere Lagerstellen 17 sind an der dem Podest 18 zugewandten Seite eines Brückenelements 19 angeordnet. Das Brückenelement 19 ruht auf zwei seitlich neben dem Podest 18 auf dem Trägerelement 9 angeordneten Pfeilern 20. Das Brückenelement 19 dient zusätzlich der Aufnahme mindestens eines Positionssensors 21.

Das Brückenelement 19, die Pfeiler 20, das Podest 18 sowie das Trägerelement 9 können stoff-, kraft- und/oder formschlüssig miteinander verbunden sein. Im Ausführungsbeispiel ist für die Verbindung zwischen Trägerelement 9, Pfeilern 20 und Brückenelement 19 jeweils eine Schraubverbindung vorgesehen. Die mindestens zwei Pfeiler 20 sind bevorzugt als Gleichteile ausgelegt und werden spiegelverkehrt in die Indexier-Vorrichtung 1 eingesetzt. Dies spart Kosten bei der Herstellung sowie bei der Lagerhaltung.

Der mindestens eine Positionssensor 21 kann als Näherungsschalter ausgeführt sein. Näherungsschalter sind Sensoren, die auf Annäherung, das heißt ohne direkten Kontakt berührungsfrei reagieren. Näherungsschalter werden beispielsweise bei technischen Prozessen zur Positionserkennung von Werkstücken und Werkzeugen eingesetzt.

Es ist denkbar, den mindestens einen Positionssensor 21 als induktiven Näherungsschalter auszuführen, welcher sowohl bei ferromagnetischen als auch bei nichtmagnetischen metallischen Gegenständen reagiert. Weiterhin kann der mindestens eine Positionssensor 21 als kapazitiver Näherungsschalter ausgeführt sein, welcher sowohl auf metallische wie auch nichtmetallische Werkstoffe reagiert. Bei Annäherung eines Objektes ändert sich die Schwingfrequenz des Näherungsschalter-Schwingkreises. Auch kann der mindestens eine Positionssensor 21 als magnetische Näherungsschalter ausgeführt sein, welcher auf ein Magnetfeld reagiert. Außerdem kann der mindestens eine Positionssensor 21 als optischer Näherungsschalter ausgeführt werden, welcher auf Lichtreflexion reagiert. Eine Ausführung des mindestens einen Positionssensors 21 als Ultraschall-Näherungsschalter ist ebenfalls denkbar. Sie werten die Reflexion eines Ultraschallsignals an einem Hindernis aus. Nicht zuletzt kann eine Lichtschranke als mindestens ein Positionssensor 21 dienen, sie wertet die Unterbrechung eines Lichtstrahles aus. Weitere Ausführungen für den mindestens einen Positionssensor 21 sind ausdrücklich nicht ausgeschlossen.

Der mindestens eine Positionssensor 21 dient zur Ermittlung der Lage beziehungsweise Position des beweglichen Elements 8 und damit der oberen Teilaufnahmeeinheit 6 im Verhältnis zur unteren Teilaufnahmeeinheit 5. Erst wenn der mindestens eine Positionssensor 21 eine Position detektiert, in welcher die untere Teilaufnahmeeinheit 5 sowie die obere Teilaufnahmeeinheit 6 sich gegenüberstehen oder zumindest nahezu gegenüberstehen, kann das Eingriffselement 4 in seine zweite Position unter Einwirkung der Antriebseinheit 2 verfahren werden.

Durch die vier Lagerstellen 17 in der Führungseinheit 3 ist für das Eingriffselement 4 lediglich eine translatorische Bewegung entlang seiner Längsachse möglich. Geschnitten quer zu der Längsachse des Eingriffselements 4 weist das Eingriffselement 4 eine quadratische Fläche auf. Das Eingriffselement 4 ist derart in der Führungseinheit 3 gelagert, dass die sich der quadratischen Querschnittsfläche des Eingriffselements 4 anschließenden Führungsflächen 22 zu einer zum Trägerelement 9 senkrechten Achse A einen 45 ° Winkel aufweisen.

Die vier Lagerstellen 17 weisen jeweils einen Lagerbock 23 auf. In jedem Lagerbock 23 ist eine Führungsrolle 24 gelagert, bevorzugt in einem Kugellager 25. Jede Führungsrolle 24 steht in Kontakt mit einer der Führungsflächen 22 des Eingriffselements 4. Somit weist auch jede Führungsrolle 24 eine Neigung von 45 ° im Hinblick auf die auf dem Trägerelement 9 senkrecht stehenden Achse A auf. Alle in der Indexier-Vorrichtung 1 eingesetzten Lagerstellen 17 sind bevorzugt als Gleichteile ausgelegt, um Kosten zu senken, die Verwechselungsgefahr zu unterbinden und Lagerraum zu sparen.

Das Eingriffselement 4 kann eine Bohrung 26 aufweisen. Hierdurch wird bewegte Masse eingespart. Das Eingriffselement spricht schneller auf den Bewegungsimpuls durch die Antriebseinheit 2 an.

In der mindestens einen Stoppposition der Indexier-Vorrichtung 1 bilden die sich gegenüberliegenden Teilaufnahmeeinheiten 5, 6 in ihrer gegenüberliegenden Position eine Aufnahme für das Eingriffselement aus, welche vier Lagerstellen 17 aufweist. Diese vier Lagerstellen 17 sind genauso orientiert, wie die vier Lagerstellen 17 in der Führungseinheit 3. Das Eingriffselement 4 wird somit an acht Kontaktstellen an den Führungsflächen 22 geführt. Durch die konische Gestalt des Eingriffselements 4 in seiner Längserstreckung wird das Lagerspiel herausgedrückt. Die hierbei entstehenden Kräfte können von den Kugellagern 25 aufgenommen werden. Durch diesen Aufbau der Indexier-Vorrichtung 1 werden nur geringe Kräfte in das bewegliche Element 8 eingeleitet. Insgesamt ist das bewegliche Element 8 durch die Indexier-Vorrichtung 1 fest und spielfrei positioniert.

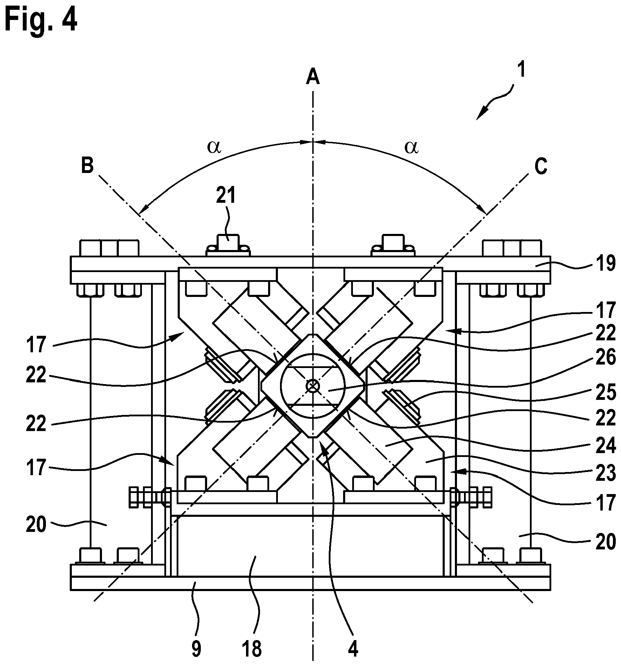

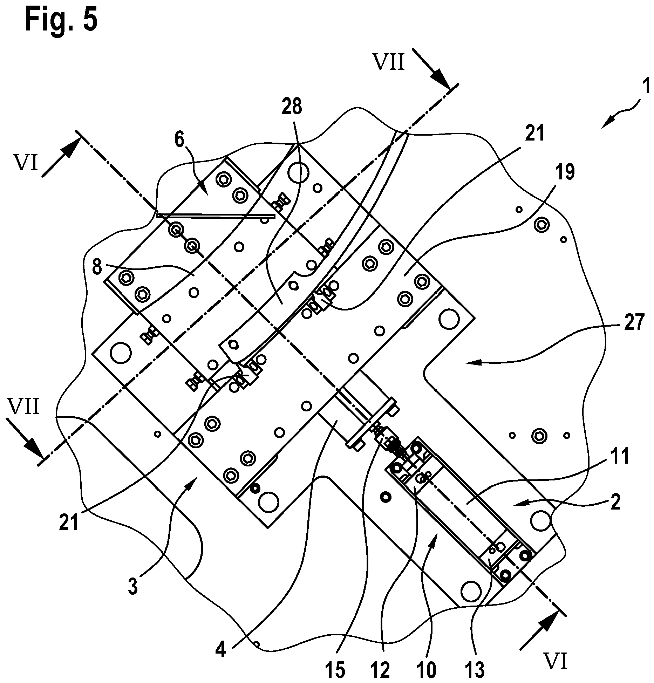

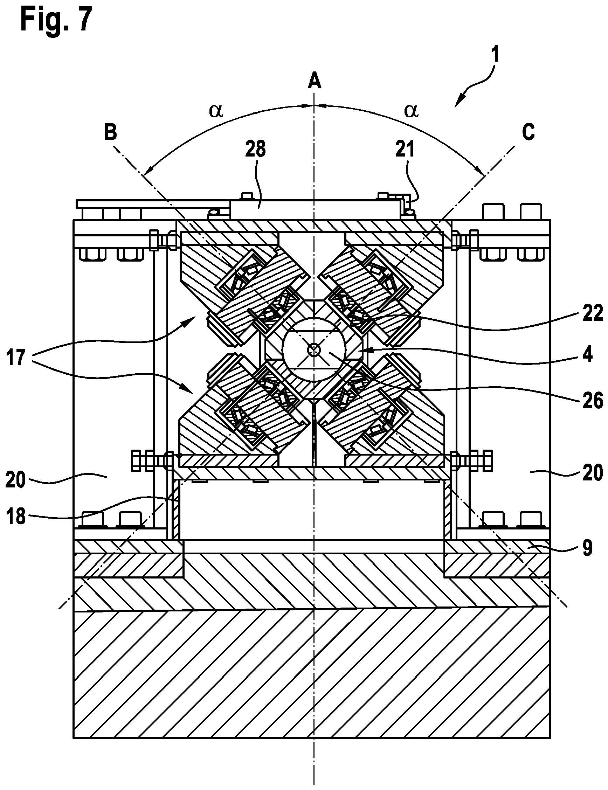

Die Figur 4 zeigt eine Vorderansicht einer Indexier-Vorrichtung 1 gemäß Figur 1 und die Figur 7 zeigt eine Vorderschnittansicht gemäß der Linie VII - VII in der Figur 5. Zur Verdeutlichung der Orientierung des Eingriffselements 4 zwischen den Lagerstellen 17 ist jeweils eine zum Trägerelement 9 senkrechte Achse A eingezeichnet. Weiterhin ist eine Achse B durch die links oben angeordnete Lagerstelle 17 sowie die rechts unten angeordnete Lagerstelle 17 eingezeichnet. Zwischen den Achsen A und B ist ein Winkel Alpha eingezeichnet. Zwischen der Lagerstelle 17 rechts oben und der Lagerstelle 17 links unten ist eine Achse C eingezeichnet. Zwischen den Achsen A und C ist wiederum ein Winkel Alpha eingezeichnet, welcher das Maß 45 ° aufweist.

In der Figur 5 ist eine Draufsicht auf einen Ausschnitt einer Bodenplatte 27 zu sehen, auf welcher das Trägerelement 9 samt einer weiteren Indexier-Vorrichtung 1 festgelegt ist. Bei dieser Indexier-Vorrichtung 1 ist lediglich die Position der Lagerstellen 17 der unteren Teilaufnahmeeinheit 5 gegenüber der Position der Lagerstellen 17 der Führungseinheit 3 in Hinblick auf die in den Figuren 1 bis 4 gezeigten Indexier-Vorrichtung 1 verändert. Weiterhin ist ein Kontaktelement 28 gezeigt, welches mit dem mindestens einen Positionssensor 21 interagiert. Dieses Kontaktelement 28 kann wie dargestellt bogenförmig ausgeführt sein, jedoch auch jede andere Form, welche nicht zum Funktionsverlust führt, annehmen. Das Kontaktelement 28 ist an dem beweglichen Element 8 festgelegt. An dem beweglichen Element 8 ist die obere Teilaufnahmeeinheit 6 für das Eingriffselement 4 festgelegt. Durch die Interaktion zwischen dem mindestens einem Positionssensor 21 und dem Kontaktelement 28 kann die Position des beweglichen Elements 8 im Hinblick auf die Position der unteren Teilaufnahmeeinheit 5 detektiert werden. Befinden sich die Teilaufnahmeeinheiten 5, 6 in einer übereinanderliegenden, deckungsgleichen Position, kann das Eingriffselement zwischen sie eindringen und somit die Position des beweglichen Elements 8 festlegen. Die Fixierung der Position des beweglichen Elements 8 erfolgt somit kraft und spielfrei. Um eventuell verbleibendes Spiel herauszudrücken, ist die Kontur des Eingriffselements 4 in seiner Längserstreckung konisch aufgebaut. Wenn sich das Eingriffselement 4 in seiner zweiten Position befindet, liegt der Bereich des Eingriffselementes 4 mit dem größten Querschnitt an den Führungsrollen 24 der zusammen vier Lagerstellen 17 der Teilaufnahmeeinheiten 5, 6 an.

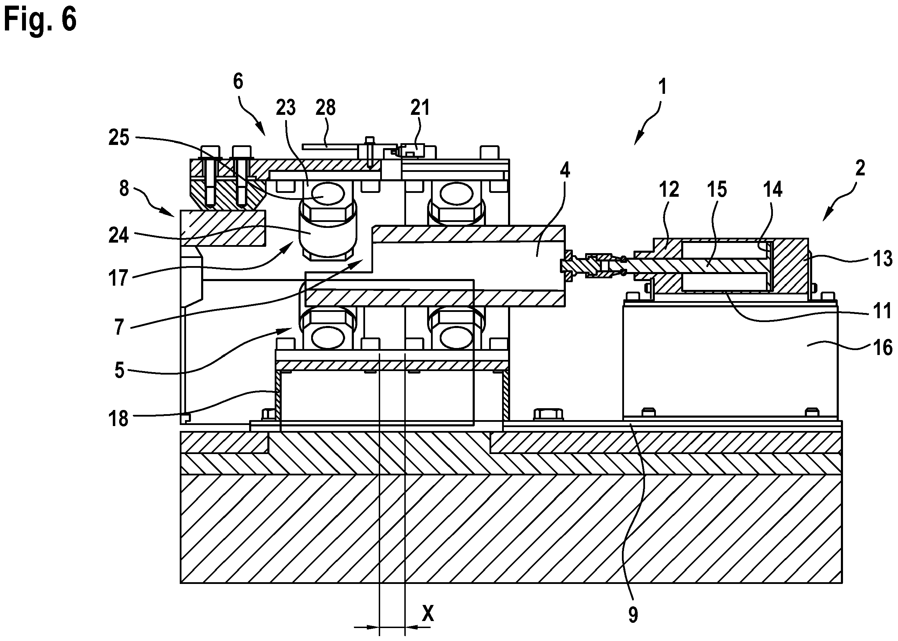

Die Figur 6 zeigt eine Seitenschnittansicht von rechts gemäß der Linie VI - VI in der Figur 5. Mit X ist in der Figur 6 der Abstand zwischen den Lagerstellen 17 der Führungseinheit 3 sowie den Lagerstellen 17 der Teilaufnahmeeinheiten 5, 6 gezeigt. Diese Distanz X kann je nach Verwendung der Indexier-Vorrichtung 1 variieren. Die obere Teilaufnahmeeinheit 6 kann stoff-, kraft- und/oder formschlüssig an dem beweglichen Element 8 festgelegt sein. An der oberen Teilaufnahmeeinheit 6 sind wiederum zwei Lagerstellen 17 mit einem Lagerbock 23, einer Führungsrolle 24 sowie mindestens einem Kugellager 25 festgelegt.

Das bewegliche Element 8 ist beispielweise als Schwerlast-Rundtisch ausgeführt, auf dem mindestens eine Maschine für die Herstellung von Fahrzeugreifen angeordnet ist. Es können jedoch zwei oder mehr Maschinen für die Herstellung von Fahrzeugreifen auf dem beispielsweise als Schwerlast-Rundtisch ausgeführten beweglichen Element 8 angeordnet sein.

### BEZUGSZEICHENLISTE

- 1: Indexier-Vorrichtung
- 2: Antriebseinheit
- 3: Führungseinheit
- 4: Eingriffselement
- 5: untere Teilaufnahmeeinheit
- 6: obere Teilaufnahmeeinheit (korrespondierende Teilaufnahmeeinheit)
- 7: Aussparung
- 8: bewegliches Element
- 9: Trägerelement
- 10: Kolbenstangenzylinder
- 11: Zylinderrohr
- 12: Lagerdeckel
- 13: Abschlussdeckel
- 14: Kolben
- 15: Kolbenstange
- 16: Sockel
- 17: Lagerstellen
- 18: Podest
- 19: Brückenelement
- 20: Pfeiler
- 21: Positionssensor
- 22: Führungsfläche
- 23: Lagerbock
- 24: Führungsrolle
- 25: Kugellager
- 26: Bohrung im Eingriffselement 4
- 27: Bodenplatte
- 28: Kontaktelement
- A: senkrechte Achse
- B: geneigte Achse
- C: geneigte Achse
- α: Winkel Alpha zwischen den Achsen A und B sowie A und C
- X: Distanz zwischen den Lagerstellen

## Patentansprüche

1. Vorrichtung (1) zur lagerichtigen Fixierung von einem an mindestens einer oberen Teilaufnahmeeinheit (6) angeordneten beweglichen Element (8), für die Herstellung von Elastomer-Erzeugnissen, aufweisend eine Antriebseinheit (2), eine Führungseinheit (3), ein Eingriffselement (4), das bewegliche Element (8) mit der oberen Teilaufnahmeeinheit (6), und
- eine auf der Führungseinheit (3) stationär angeordnete untere Teilaufnahmeeinheit (5),
- ein auf der Führungseinheit (3) und der unteren Teilaufnahmeeinheit (5) verschiebbar gelagertes und mittels der Antriebseinheit (2) verschiebbares Eingriffselement (4),
- wobei die obere und die untere Teilaufnahmeeinheit (5, 6) derart zueinander positionierbar sind, dass sie eine Aufnahme für das Eingriffselement (4) bilden, in welche das Eingriffselement (4) verfahrbar und derart in eine Stoppposition bringbar ist, in welcher das Eingriffselement (4) den größtmöglichen Abstand zur Antriebseinheit (2) einnimmt und
- wobei das Eingriffselement (4) in seiner Längserstreckung eine konische Kontur aufweist.

2. Vorrichtung (1) nach Patentanspruch 1, **dadurch gekennzeichnet, dass** das Eingriffselement (4) am vorderen Ende eine Aussparung (7) aufweist.

3. Vorrichtung (1) nach einem der vorhergehenden Patentansprüche, **dadurch gekennzeichnet, dass** das Eingriffselement (4) einen zur mittleren Trennungsebene achsensymmetrischen Querschnitt in einer Schnittrichtung quer zu seiner Längserstreckung aufweist.

4. Vorrichtung (1) nach einem der vorhergehenden Patentansprüche, **dadurch gekennzeichnet, dass** das Eingriffselement (4) einen quadratischen Querschnitt in einer Schnittrichtung quer zu seiner Längserstreckung aufweist.

5. Vorrichtung (1) nach einem der vorhergehenden Patentansprüche, **dadurch gekennzeichnet, dass** das Eingriffselement in seiner Längsstreckung im Bereich der Teilaufnahmeeinheiten (5, 6) konisch ausgeführt ist und dass das Eingriffselement (4) im Bereich der Führungseinheit (3) zylindrisch ausgeführt ist oder planparallele Flächen aufweist.

6. Vorrichtung (1) nach einem der vorhergehenden Patentansprüche, **dadurch gekennzeichnet, dass** Lagerstellen (17) für das Eingriffselement (4) an der Führungseinrichtung (3) und an den mindestens zwei Teilaufnahmeeinheiten (5, 6) ausgebildet sind und einen Winkel (α) zwischen 0 ° und 90 °, bevorzugt zwischen 30 ° und 60 °, besonders bevorzugt zwischen 40 ° und 50 ° im Hinblick auf eine senkrecht zu einem Trägerelement (9) stehende Achse A aufweisen.

7. Vorrichtung (1) nach einem der vorhergehenden Patentansprüche, **dadurch gekennzeichnet, dass** die Führungsflächen (22) des Eingriffselements einen Winkel (α) zwischen 0 ° und 90 °, bevorzugt zwischen 30 ° und 60 °, besonders bevorzugt zwischen 40 ° und 50 ° im Hinblick auf eine senkrecht zu einem Trägerelement (9) stehende Achse A aufweisen.

8. Vorrichtung (1) nach Patentanspruch 6 oder 7, **dadurch gekennzeichnet, dass** jede Lagerstelle (17) zum Eingriffselement planparallele Auflagerflächen oder Führungsrollen (24) aufweist.

9. Vorrichtung (1) nach einem der Patentansprüche 6 bis 8, **dadurch gekennzeichnet, dass** jede Lagerstelle (17) einen Lagerbock (23), eine Führungsrolle (24) und mindestens ein Kugellager (25) aufweist.

10. Vorrichtung (1) nach einem Patentansprüche 2 bis 9, **dadurch gekennzeichnet, dass** die Aussparung (7) an dem Eingriffselement (4) eine Längserstreckung aufweist, welche in der eingezogenen Position des Eingriffselements (4) die obere Teilaufnahmeeinheit (6) samt ihrer Lagerstellen (17) frei gibt.

11. Vorrichtung (1) nach einem der Patentansprüche 6 bis 10, **dadurch gekennzeichnet, dass** die Lagerstellen (17) von der ortsfesten Teilaufnahmeeinheit (5) und der beweglichen Teilaufnahmeeinheit (6) quer zu der Eingriffselementlängsachse gegeneinander fluchtend ausgerichtet sind.

12. Vorrichtung (1) nach einem der vorhergehenden Patentansprüche, **dadurch gekennzeichnet, dass** die Antriebseinheit (2) als Kolbenstangenzylinder (10) ausgeführt ist und dass das Eingriffselement (4) mit einer Kolbenstange (15) des Kolbenstangenzylinders (10) gekoppelt ist.

13. Vorrichtung (1) nach einem der vorhergehenden Patentansprüche, **dadurch gekennzeichnet, dass** das bewegliche Element (8) als Schwerlast-Rundtisch ausgeführt ist.

## Claims

1. Device (1) for the positionally correct fixing of a movable element (8) arranged on at least one upper partial receiving unit (6), for the production of elastomer products, having a drive unit (2), a guide unit (3), an engagement element (4), the movable element (8) with the upper partial receiving unit (6), and
- a lower partial receiving unit (5) arranged in a stationary manner on the guide unit (3),
- an engagement element (4) which is mounted displaceably on the guide unit (3) and the lower partial receiving unit (5) and can be displaced by means of the drive unit (2),
- wherein the upper and the lower partial receiving unit (5, 6) can be positioned with respect to one another in such a way that they form a receptacle for the engagement element (4) into which the engagement element (4) can be moved and can be brought in such a way into a stopped position in which the engagement element (4) assumes the greatest possible distance from the drive unit (2), and
- wherein the engagement element (4) has a conical contour in its longitudinal extent.

2. Device (1) according to patent Claim 1, **characterized in that** the engagement element (4) has a cutout (7) at the front end.

3. Device (1) according to one of the preceding patent claims, **characterized in that** the engagement element (4) has a cross section which is axisymmetrical to the central parting plane in a section direction transversely to its longitudinal extent.

4. Device (1) according to one of the preceding patent claims, **characterized in that** the engagement element (4) has a square cross section in a section direction transversely to its longitudinal extent.

5. Device (1) according to one of the preceding patent claims, **characterized in that** the engagement element is designed to be conical in its longitudinal extent in the region of the partial receiving units (5, 6), and **in that** the engagement element (4) is designed to be cylindrical in the region of the guide unit (3) or has plane-parallel surfaces.

6. Device (1) according to one of the preceding claims, **characterized in that** bearing points (17) for the engagement element (4) are formed on the guide device (3) and on the at least two partial receiving units (5, 6) and have an angle (α) between 0° and 90°, preferably between 30° and 60°, particularly preferably between 40° and 50°, with respect to an axis A perpendicular to a support element (9).

7. Device (1) according to one of the preceding claims, **characterized in that** the guide surfaces (22) of the engagement element have an angle (α) between 0° and 90°, preferably between 30° and 60°, particularly preferably between 40° and 50°, with respect to an axis A perpendicular to a support element (9).

8. Device (1) according to Patent Claim 6 or 7, **characterized in that** each bearing point (17) has support surfaces or guide rollers (24) which are plane-parallel to the engagement element.

9. Device (1) according to one of Patent Claims 6 to 8, **characterized in that** each bearing point (17) has a bearing block (23), a guide roller (24) and at least one bearing (25).

10. Device (1) according to one of Patent Claims 2 to 9, **characterized in that** the cutout (7) on the engagement element (4) has a longitudinal extent which, in the retracted position of the engagement element (4), frees the upper partial receiving unit (6) together with its bearing points (17).

11. Device (1) according to one of Patent Claims 6 to 10, **characterized in that** the bearing points (17) of the positionally fixed partial receiving unit (5) and of the movable partial receiving unit (6) are oriented in alignment with one another transversely to the engagement element longitudinal axis.

12. Device (1) according to one of the preceding patent claims, **characterized in that** the drive unit (2) is configured as a piston rod cylinder (10), and **in that** the engagement element (4) is coupled to a piston rod (15) of the piston rod cylinder (10).

13. Device (1) according to one of the preceding patent claims, **characterized in that** the movable element (8) is configured as a heavy-load rotary table.

## Revendications

1. Dispositif (1), destiné à fixer en bonne position un élément mobile (8) placé sur au moins une unité de logement partiel (6) supérieure, pour la fabrication de produits en élastomère, comportant une unité d'entraînement (2), une unité de guidage (3), une unité d'engagement (4), l'élément mobile (8) avec l'unité de logement partiel (6),
et
- une unité de logement partiel (5) inférieure, placée de manière stationnaire sur l'unité de guidage (3),
- une unité d'engagement (4), logée de manière déplaçable sur l'unité de guidage (3) et sur l'unité de logement partiel (5) inférieure et déplaçable à l'aide de l'unité d'entraînement (2),
- les unités de logement partiel supérieure et inférieure (5, 6) étant susceptibles d'être positionnées l'une par rapport à l'autre de sorte à former un logement pour l'unité d'engagement (4), dans lequel l'unité d'engagement (4) est déplaçable et susceptible d'être amenée de la sorte dans une position d'arrêt dans laquelle l'unité d'engagement (4) adopte le plus grand écart possible par rapport à l'unité d'entraînement (2) et
- l'unité d'engagement (4) comportant sur son extension longitudinale un contour conique.

2. Dispositif (1) selon la revendication 1, **caractérisé en ce que** sur l'extrémité antérieure, l'unité d'engagement (4) comporte une encoche (7).

3. Dispositif (1) selon l'une quelconque des revendications précédentes, **caractérisé en ce que** l'unité d'engagement (4) présente une symétrie axiale par rapport au plan de séparation médian, dans une direction de coupe à la transversale de son extension longitudinale.

4. Dispositif (1) selon l'une quelconque des revendications précédentes, **caractérisé en ce que** l'unité d'engagement (4) présente une section transversale quadratique dans une direction de coupe à la transversale de son extension longitudinale.

5. Dispositif (1) selon l'une quelconque des revendications précédentes, **caractérisé en ce que** dans son extension longitudinale, dans la zone des unités de logement partiel (5, 6), l'unité d'engagement est réalisée sous forme conique et **en ce que** dans la zone de l'unité de guidage (3), l'unité d'engagement (4) est réalisée sous forme cylindrique ou comporte des surfaces à plans parallèles.

6. Dispositif (1) selon l'une quelconque des revendications précédentes, **caractérisé en ce que** des points d'appui (17) pour l'unité d'engagement (4) sont conçus sur le système de guidage (3) et sur les au moins deux unités de logement partiel (5, 6) et présentent un angle (α) compris entre 0° et 90°, de préférence compris entre 30° et 60°, de manière particulièrement préférentielle, compris entre 40° et 50° en rapport à un axe A debout à la verticale par rapport à un élément porteur (9).

7. Dispositif (1) selon l'une quelconque des revendications précédentes, **caractérisé en ce que** les surfaces de guidage (22) de l'unité d'engagement présentent un angle (α) compris entre 0° et 90°, de préférence compris entre 30° et 60°, de manière particulièrement préférentielle, compris entre 40° et 50° en rapport à un axe A debout à la verticale par rapport à un élément porteur (9).

8. Dispositif (1) selon la revendication 6 ou 7, **caractérisé en ce que** chaque point d'appui (17) comporte des surfaces de contact ou des galets de guidage (24) à plan parallèle par rapport à l'unité d'engagement.

9. Dispositif (1) selon l'une quelconque des revendications 6 à 8, **caractérisé en ce que** chaque point d'appui (17) comporte un palier (23), un galet de guidage (24) et au moins un roulement à bille (25).

10. Dispositif (1) selon l'une quelconque des revendications 2 à 9, **caractérisé en ce que** l'encoche (7) sur l'unité d'engagement (4) présente une extension longitudinale qui, dans la position rentrée de l'unité d'engagement (4) libère l'unité de logement partiel (6) supérieure avec ses points d'appui (17).

11. Dispositif (1) selon l'une quelconque des revendications 6 à 10, **caractérisé en ce que** les points d'appui (17) de l'unité de logement partiel (5) stationnaire et de l'unité de logement partiel mobile (6) sont orientés à la transversale de l'axe longitudinal de l'unité d'engagement en étant alignés l'un contre l'autre.

12. Dispositif (1) selon l'une quelconque des revendications précédentes, **caractérisé en ce que** l'unité d'entraînement (2) est réalisée sous la forme d'un cylindre à tiges de piston (10) et **en ce que** l'unité d'engagement (4) est accouplée avec une tige de piston (15) du cylindre à tiges de piston (10).

13. Dispositif (1) selon l'une quelconque des revendications précédentes, **caractérisé en ce que** l'élément mobile (8) est réalisé sous la forme d'un plateau rotatif pour charges lourdes.
